# EUROPÄISCHE PATENTSCHRIFT

(11) **EP 1 081 841 B1**
(45) Veröffentlichungstag und Bekanntmachung des Hinweises auf die Patenterteilung: **10.02.2010**
(21) Anmeldenummer: 00118568.5
(22) Anmeldetag: 26.08.2000
(51) Int. Cl.: H02M 7/219, H02M 7/162

(54) **Schaltungsanordnung für einen Gleichrichter**
Circuit arrangement for a rectifier
Arrangement de circuit pour un redresseur

(30) Priorität: 03.09.1999 DE 19942228
(43) Veröffentlichungstag der Anmeldung: 07.03.2001
(73) Patentinhaber: EWM Hightec Welding GmbH, 56271 Mündersbach (DE)
(72) Erfinder: Siebel, Henrik, 57223 Kreuztal (DE)
(74) Vertreter: Schippan, Ralph

(56) Entgegenhaltungen:
- US-A- 5 633 793
- PATENT ABSTRACTS OF JAPAN Bd. 1998, Nr. 08, 30. Juni 1998 (1998-06-30) & JP 10 084674 A (SANKEN ELECTRIC), 31. März 1998 (1998-03-31)
- PATENT ABSTRACTS OF JAPAN Bd. 1998, Nr. 04, 31. März 1998 (1998-03-31) & JP 09 322543 A (NIPPON TELEGRAPH & TELEPHONE CORPORATION), 12. Dezember 1997 (1997-12-12)
- KATSUNORI TANIGUCHI ET AL.: "High-performance soft-switched three-phase converter with sinusoidal input current and unity power factor." IEEE, 1997, Seiten 672-678, XP010215735

## Beschreibung

Die Erfindung betrifft eine Schaltungsanordnung für einen Gleichrichter bestehend aus einem von einem Dreiphasennetz gespeisten, von einer Steuereinrichtung getakteten Gleichrichter, dessen Brückenzweige jeweils separat derart von der Steuereinrichtung ansteuerbare Halbleiterschalter und dazu parallel geschaltete Leistungsdioden aufweisen, daß im Wechselspannungseingang des Gleichrichters sinusförmige Ströme fließen und die Zwischenkreisspannung auf einem konstanten Wert gehalten wird, wobei der Gleichrichter über einen Kommutierungsvierpol mit einem kapazitiven Zwischenkreis verbunden ist, welcher zur Versorgung einer Schweißstromquelle für den Strom des Schweißprozesses dient, wobei der Kommutierungsvierpol Entkopplungsmittel zur Entkopplung der Gleichrichterausgangsspannung von der Zwischenkreisspannung, einen von der Steuereinrichtung getaktet ansteuerbaren induktiven Energiespeicher und einen mit dem ansteuerbaren induktiven Energiespeicher gekoppelten Entlastungspfad aufweist derart, daß in einer ersten Betriebsphase des Kommutierungsvierpols die Gleichrichterausgangsspannung durch Aktivierung des induktiven Energiespeichers zu Null geführt wird, woraufhin das von der Steuereinrichtung gesteuerte Einschalten der Halbleiterschalter des Gleichrichters spannungslos erfolgt, und daß in einer zweiten Betriebsphase des Kommutierungsvierpols die Energie des induktiven Energiespeichers über einen quasi-resonanten Umladevorgang entlang des Entlastungspfades in kapazitive Energiespeichermittel überführt wird, die wiederum ein "weiches" Ausschalten der Leistungshalbleiter ermöglichen. Darüber hinaus betrifft die Erfindung ein Verfahren zum Betrieb einer solchen Gleichrichteranordnung.

Eine solche Schaltung ist aus der US 5633793 bw. der JP 10084674 bekannt. Hierbei wird durch die Taktung der Halbleiterschalter in den Diodenbrückenzweigen der aktiven Gleichrichteranordnung sowie durch eine entsprechende Variation der Pulsbreite sowohl der Strom im Wechselspannungseingang als auch auf die Gleichspannung am Gleichrichterausgang eingewirkt. Hierdurch wird die Zwischenkreisspannung stabilisiert und die in den Wechselspannungseingang des Gleichrichters fließenden Ströme sind idealerweise sinusförmig. Hierzu sind in der Steuereinheit Regelkreise für den Wechselstrom und/oder die Zwischenkreisgleichspannung vorgesehen, die über eine Meßeinrichtung erfaßt werden.

Die bekannte Lösung zeichnet sich dadurch aus, daß die Leistungsschalter der Gleichrichterbrücke stets nur in einem solchen zeitlichen Intervall eingeschaltet werden, in welchem die Spannung am Ausgang des Gleichrichters zu Null gesetzt ist, so daß entsprechende Schaltungsverluste vermieden werden. Darüber hinaus erfolgt durch die kapazitiven Energiespeichermittel auch das Ausschalten der Leistungsschalter "weicher".

Die im geschlossenen Zustand der Leistungsschalter im induktiven Energiespeicher gespeicherte Energie wird während des Zeitintervalls vor dem Öffnen des Schalters in den kapazitiven Energiespeicher verschoben. Darüber hinaus wird auch der im Kommutierungsvierpol vorgesehene weitere steuerbare Schalter nur im Status Strom gleich Null eingeschaltet und wiederum energiemäßig über eine im Netzwerk enthaltene Kapazität entlastet (weich) ausgeschaltet.

Es lassen sich also bei deutlich reduzierten Schaltverlusten die Vorteile erhalten, die darin bestehen, daß in den Wechselspannungseingängen des Gleichrichters nahezu sinusförmige Ströme fließen und die Zwischenkreisspannung auch bei variabler Netzspannung konstant gehalten wird.

Der Erfindung liegt davon ausgehend die Aufgabe zugrunde, die bekannte Vorrichtung hinndtlid des Wirkungsgradesweite zu verbessern. Die erfindungsgemäße Lösung besteht darin, daß den Entkopplungsmitteln eine von der Steuereinrichtung steuerbare Schaltereinheit zugeordnet ist, derart daß eine Energierückspeisung vom Gleichspannungskreis ins Wechselspannungssystem realisierbar ist.

Die Erfindung wird im folgenden anhand einer ein Ausführungsbeispiel darstellenden Zeichnung näher erläutert. Dabei zeigen:
- Fig. 1: ein Schaltungsdiagramm für ein Ausführungsbeispiel einer erfindungsgemäßen Gleichrichteranordnung
- Fig. 2: Darstellungen von Strom- bzw. Spannungsverläufen zur Erläuterung der Funktionsweise der in Fig. 1 dargestellten Schaltung im Gleichrichterbetrieb (Einspeisen)
- Fig. 3a,3b,3c: auszugsweise Darstellungen der Schaltungen nach Fig. 1 jeweils zu unterschiedlichen Zeitpunkten T0 bis T7 der Strom-/ Spannungsverläufe gemäß Fig. 2
- Fig. 4: Darstellungen von Strom- bzw. Spannungsverläufen zur Erläuterung der Funktionsweise der in Fig. 1 dargestellten Schaltung im Wechselrichterbetrieb (Rückspeisen)
- Fig. 5a,5b,5c: auszugsweise Darstellung der Schaltung nach Fig. 1 jeweils zu unterschiedlichen Zeitpunkten T0 bis T7 der Strom-/Spannungsverläufe gemäß Fig. 4.

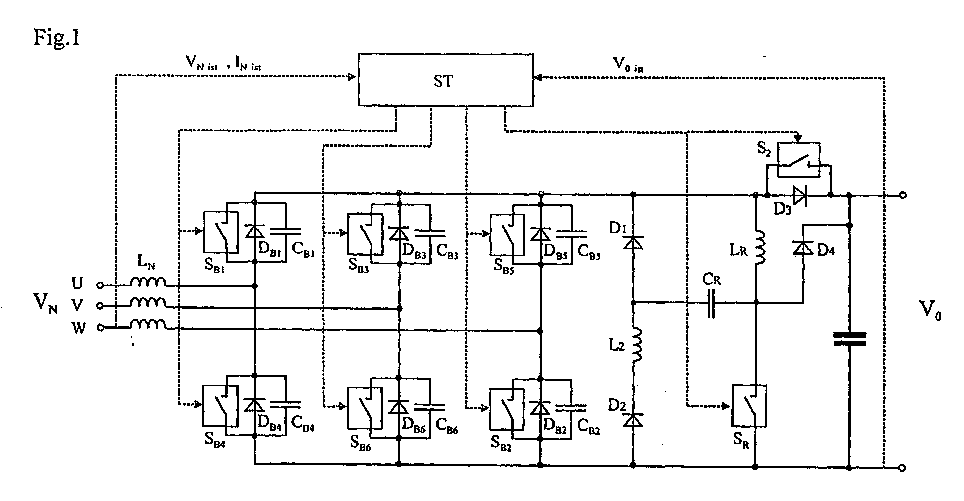

Figur 1 zeigt den Schaltungsaufbau eines Ausführungsbeispieles für eine erfindungsgemäße Gleichrichteranordung. Die Schaltung besteht aus einem von einem Dreiphasennetz UVW über Eingangsdrosseln L_{N} gespeisten Gleichrichter, wobei die Eingangsdrosseln L_{N} vorzugsweise von Netzinduktivitäten gebildet werden, welcher aus sechs Brückenzweigen besteht. In den Brückenzweigen sind jeweils parallel zueinander angeordnet Halbleiterschalter S_{B1}-S_{B6}, Dioden D_{B1}-D_{B6} und Kondensatoren C_{B1}-C_{B6}. Die Halbleiterschalter S_{B1}-S_{B6} sind steuerbar von einer Steuereinrichtung ST, welche als Eingangssignal die jeweiligen Ist-Werte der Eingangsspannung V_{Nist} und des Eingangsstromes I_{Nist} des Dreiphasennetzes UVW erhält.

Am Ausgang des Gleichrichters ist ein Kommutierungsvierpol angeordnet, welcher aus den Dioden D₁-D₄, den Induktivitäten L₂,L_{R}, dem weiteren Kondensator C_{R} und zwei weiteren steuerbaren Halbleiterschaltern S_{R} und S₂ besteht. Die weiteren steuerbaren Halbleiterschalter S_{R} und S₂ sind ebenfalls von der Steuereinrichtung ST ansteuerbar.

Der Kommutierungsvierpol besteht aus zwei Querzweigen, von den der eine Querzweig durch eine Reihenschaltung aus der Induktivität L_{R} und dem weiteren Steuerschalter S_{R} gebildet ist. Der weitere Querzweig des Kommutierungsvierpols wird durch die Reihenschaltung aus den zwei Dioden D₁,D₂ und der zur zweiten Diode D₂ in Reihe angeordneten Induktivität L₂ gebildet. Die beiden Querzweige sind über den weiteren Kondensator C_{R} direkt miteinander verbunden, wobei die Mittelanzapfung der durch die Induktivität L_{R} und den Halbleiterschalter S_{R} gebildeten Reihenschaltung über eine Kopplungsdiode D₄ mit einem dem Kommutierungsvierpol nachgeordneten Zwischenkreiskondensator verbunden ist. Parallel zur Diode D₃ ist ein steuerbarer Halbleiterschalter S₂ angeordnet, der von der Steuereinrichtung ST angesteuert wird. Am Ausgang des Zwischenkreises liegt die Zwischenkreisspannung V₀ an, die ebenfalls von der Steuereinrichtung ST erfaßt wird. Vom Zwischenkreis wird ein nicht dargestellter Verbraucher mit elektrischer Energie versorgt.

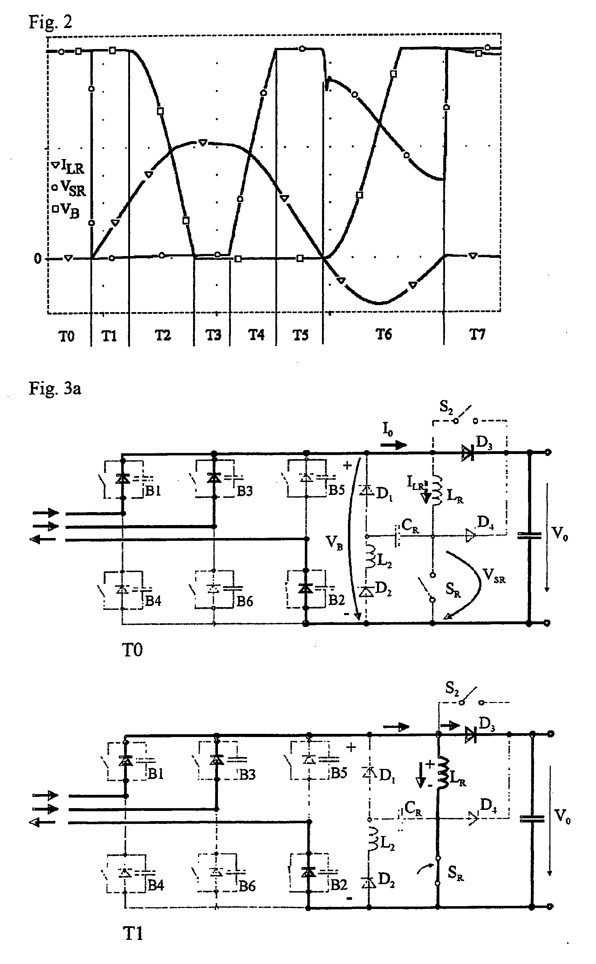

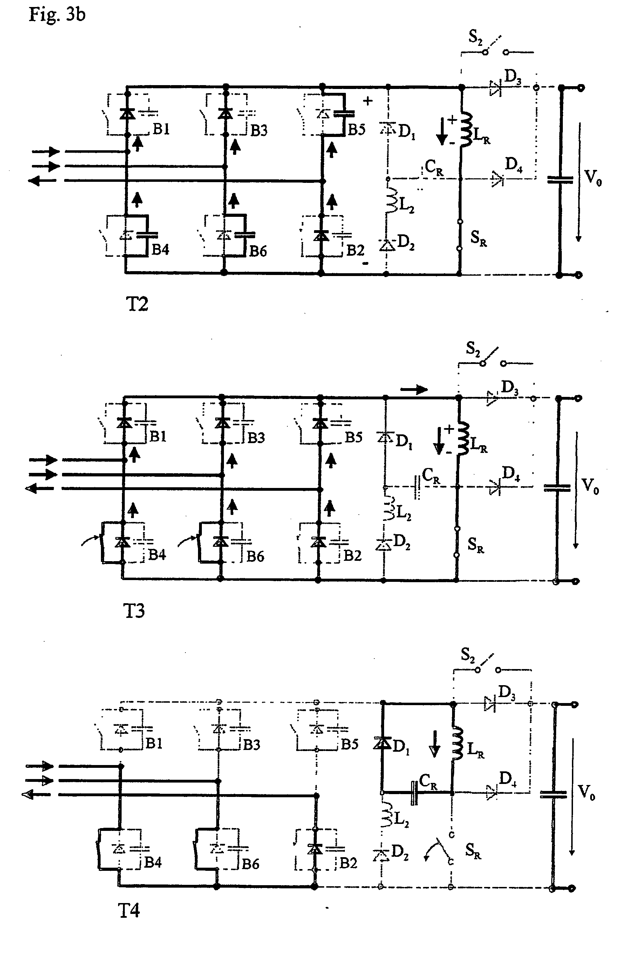

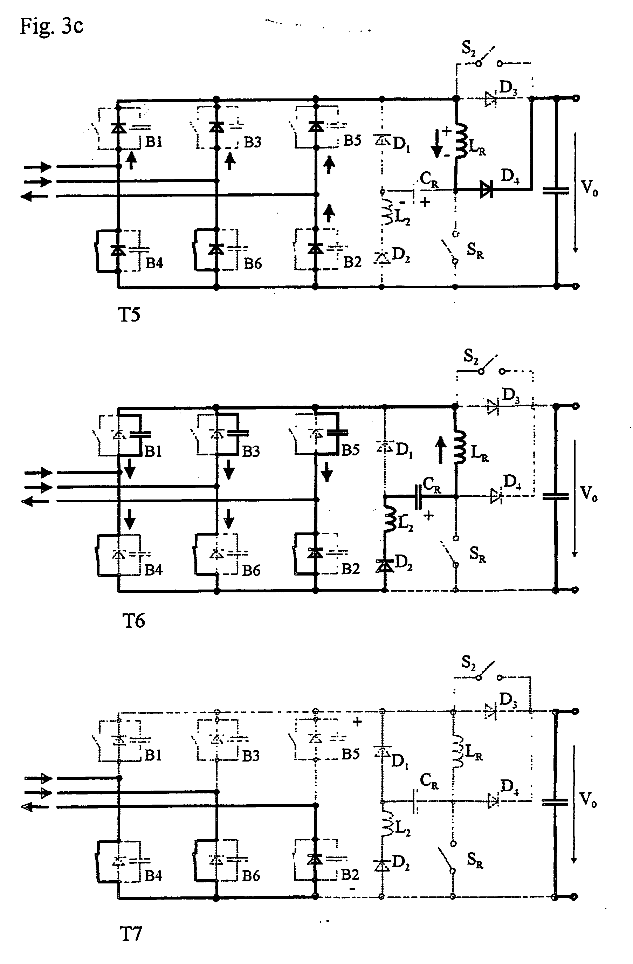

Die Funktion der soeben beschriebenen Schaltung im Gleichrichterbetrieb (Einspeisen) wird anhand der zeitlichen Strom- bzw. Spannungsverläufe in Figur 2 und den Abbildungen nach Figur 3a im folgenden näher erläutert.
Fig. 2 zeigt zeitliche Stromverläufe, jeweils in unterschiedliche Zeitintervalle T0-T7 unterteilt, für die am Ausgang des Gleichrichtes liegende Gleichrichterausgangsspannung V_{B}, für den durch die Induktivität L_{R} fließenden Strom I_{LR} und die über dem weiteren steuerbaren Halbleiterschalter S_{R} anliegende Spannung V_{SR}.

Die Figuren 3a bis 3c enthalten jeweils den Zeitabschnitten T0-T7 zugeordnete Funktionsdarstellungen, um die Betriebsweise der Schaltung zu erläutern:

Es wird zunächst angenommen, daß zum Zeitpunkt T0 der Strom in den Phasen U und V positiv und in der Phase W negativ ist. Dann ist der Gleichrichter so gesteuert, daß der Schalter S_{B2} ständig geschlossen ist, so daß die Phase W ständig mit dem negativen Potential des Zwischenkreises verbunden ist. In den Phasen U und V wird das Verfahren der Pulsbreitenmodulation angewendet, indem die Schalter S_{B4} und S_{B6} von der Steuereinrichtung ST getaktet werden.

Durch einen im folgenden näher beschriebenen Quasi-Resonanzzyklus wird die Ausgangsspannung V_{B} der Gleichrichterbrücke kurzzeitig zu Null gebracht, so daß in diesem Zeitpunkt die beiden Schalter S_{B4} und S_{B6} im spannungsfreien Zustand eingeschaltet werden können. Entsprechend dem Tastverhältnis der Pulsbreitenmodulation können anschließend die Schalter S_{B4} und S_{B6} wieder geöffnet werden, wobei dies erfindungsgemäß in einer im folgenden näher dargestellten Art und Weise "schaltentlastet" erfolgt.

Zunächst ist der Ausgangszustand zum Zeitpunkt T0 so gewählt, daß der Strom über die Dioden D_{B1},D_{B3} und D_{B2} vom Dreiphasennetz in den Gleichspannungskreis fließt. Dabei entspricht die Gleichrichterausgangsspannung V_{B} dem Wert der Zwischenkreisspannung V₀.

Durch Schließen des steuerbaren Halbleiterschalters S_{R} zu Beginn des Zeitintervalls T1 wird in der Induktivität L_{R} ein Strom aufgebaut. Der Strom in der Diode D₃ nimmt in gleicher Weise ab.

Zu Beginn des Zeitintervalls T2 ist der Strom durch die Induktivität L_{R} größer als der Netzstrom I₀, so daß die Diode D₃ stromlos wird und die Brückenkondensatoren C_{B4},C_{B5} und C_{B6} entladen werden.

Während des Zeitintervalls T3 sind dann sämtliche Kondensatoren C_{B1} bis C_{B6} der Gleichrichterbrücke vollständig entladen, d.h. daß die Gleichrichterausgangsspannung V_{B} zu Null geworden ist. Dann können die Schalter S_{B4} und S_{B6} bei der Spannung Null eingeschaltet werden und der Strom durch die Induktivität L_{R} fließt weiter über die Gleichrichterdioden D_{B1} bis D_{B6}.

Zu Beginn des Zeitintervalls T4 wird der Schalter S_{R} wieder geöffnet und der Kondensator C_{R} wird vom Strom I_{LR}, der zu diesem Zeitpunkt maximal ist, solange geladen, bis er auf die Zwischenkreisspannung V₀ aufgeladen ist. Gleichzeitig wird der Netzstrom in der Gleichrichterbrücke im Freilaufbetrieb kurzgeschlossen.

Zu Beginn des Zeitintervalls T5 fließt der Strom I_{LR} durch die Induktivität L_{R} weiter über die Diode D₄ in den Zwischenkreis und wird dort abgebaut. Dadurch wird gleichzeitig die am weiteren Halbleiterschalter S_{R} anliegende maximale Sperrspannung auf die Zwischenkreisspannung V₀ begrenzt.

Zu Beginn des Zeitintervalls T6 fließt in der Art eines quasi-resonanten Umschwingvorganges die Ladung des weiteren Kondensators C_{R} zurück in die Gleichrichterbrücke, wobei der Kodensator C_{R} entladen wird und die Kondensatoren C_{B1},C_{B3} und C_{B5} der Gleichrichterbrücke bis auf die Zwischenkreisspannung V₀ aufgeladen werden.

Schließlich ist zu Beginn des Zeitintervalls T7 der Zustand des Zeitintervalls T0 erreicht, wobei der Netzstrom durch die Halbleiterschalter S_{B4},S_{B6} und die Diode D_{B2} kurzgeschlossen ist.

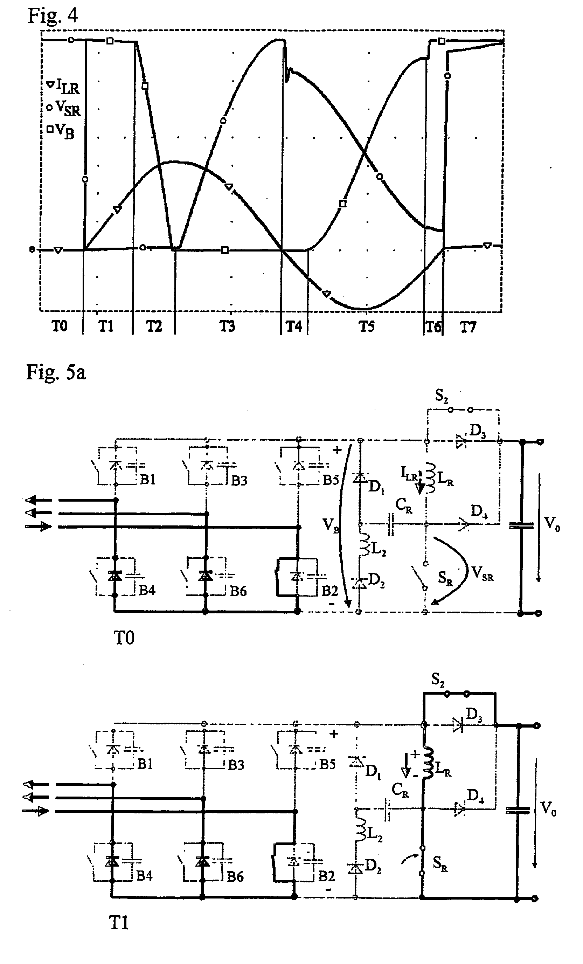

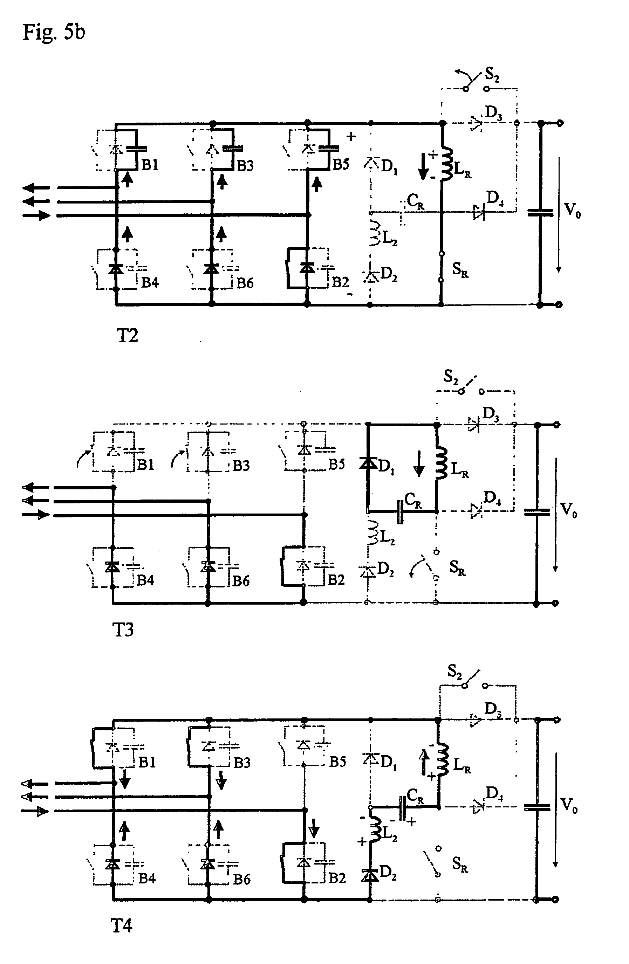

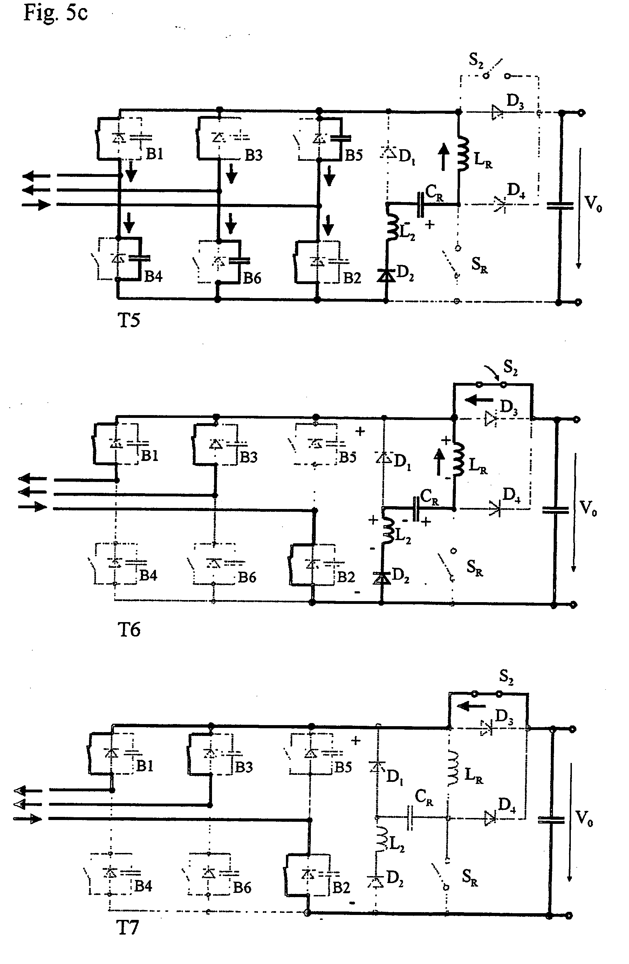

Die Funktion der Schaltung im Wechselrichterbetrieb (Rückspeisen) wird anhand der zeitlichen Strom-/ bzw. Spannungsverläufe in Fig. 4 und den Abbildungen nach Fig. 5a - 5c im folgenden näher erläutert.

Fig. 4 zeigt zeitliche Strom-/ Spannungsverläufe, jeweils in unterschiedliche Zeitintervalle T0 - T7 unterteilt, für die am Ausgang des Gleichrichters liegende Spannung V_{B}, für den durch die Induktivität L_{R} fließenden Strom I_{LR} und über dem Halbleiterschalter S_{R} anliegende Spannung V_{SR}.

Die Figuren 5a bis 5c enthalten jeweils den Zeitabschnitten T0 - T7 zugeordnete Funktionsdarstellungen, um die Betriebsweise der Schaltung zu erläutern:

Es wird zunächst angenommen, daß zum Zeitpunkt T0 der Strom in den Phasen U und V negativ und in der Phase W positiv ist. Dann ist der Gleichrichter so gesteuert, daß der Schalter S_{B2} ständig geschlossen ist, so daß die Phase W ständig mit dem negativen Potential des Zwischenkreises verbunden ist. In den Phasen U und V wird das Verfahren der Pulsbreitenmodulation verwendet, indem die Schalter S_{B1} und S_{B3} von der Steuereinheit ST getaktet werden. Durch einen im folgenden näher beschriebenen Quasi - Resonanzzyklus wird die Ausgangsspannung V_{B} der Gleichrichterbrücke kurzzeitig zu Null gebracht, so daß in diesem Zeitpunkt die Schalter S_{B1} und S_{B3} im spannungsfreien Zustand eingeschaltet werden können. Entsprechend dem Tastverhältnis können anschließend die Schalter S_{B1} und S_{B3} wieder geöffnet werden, wobei dies "schaltentlastet" erfolgt.

Zunächst ist der Ausgangszustand zum Zeitpunkt T0 so gewählt, das der Netzstrom über den Schalter S_{B2} und die Dioden D_{B4} und D_{B6} kurzgeschlossen ist.

Durch Schließen des steuerbaren Halbleiterschalters S_{R} zu Beginn des Zeitintervalls T1 wird in der Induktivität L_{R} ein Strom aufgebaut, welcher aus dem Zwischenkreis durch den noch geschlossenen Schalter S₂ fließt.

Mit dem Öffnen von Schalter S₂ wird das Zeitintervall T2 eingeleitet. Der Strom in der Induktivität L_{R} kann nun die Kondensatoren C_{B1}, C_{B3} und C_{B5} vollständig entladen. Die Gleichrichterausgangsspannung V_{B} wird also am Ende von Zeitintervall T2 zu Null.

Zu Beginn des Zeitintervalls T3 wird der Schalter S_{R} wieder geöffnet und der Kondensator C_{R} wird vom Strom I_{LR}, der zu diesem Zeitpunkt maximal ist, bis auf die Zwischenkreisspannung V₀ aufgeladen. Dabei wird der Strom in der Induktivität L_{R} zu Null. Während des Zeitintervalls T3 können die Schalter S_{B1} und S_{B3} bei Spannung Null eingeschaltet werden.

Zu Beginn des Zeitintervalls T4 kehrt sich die Stromrichtung in der Induktivität L_{R} um und fließt über D₂, L₂ und C_{R} zurück in die Gleichrichterbrücke.

Im Intervall T5 ist der Strom I_{LR} größer als der Netzstrom in der Phase W. In der Art eines quasi - resonanten Umschwingvorgangs fließt die Ladung des Kondensators C_{R} zurück in die Gleichrichterbrücke, wobei der Kondensator C_{R} entladen und die Kondensatoren C_{B4}, C_{B5} und C_{B6} geladen werden.

Zu Beginn des Zeitintervalls T6 wird der Schalter S₂ geschlossen. Die Spannung V_{B} an der Gleichrichterbrücke ist gleich der Zwischenkreisspannung V₀. Der Strom I_{LR} nimmt ab und wird zu Null.

Schließlich ist im Zeitintervall T7 der Zustand von Zeitintervall T0 erreicht, wobei der Netzstrom durch den Schalter S_{B2} und die jetzt geschlossenen Schalter S_{B1} und S_{B3} fließt.

Durch die oben beschriebenen Maßnahmen wird also ermöglicht, daß die Halbleiterschalter der Gleichrichterbrücke, die entsprechend den Vorgaben der Steuereinrichtung ST zu schließen sind, ausschließlich bei der Spannung Null geschlossen werden. Umgekehrt erfolgt ein Öffnen der Schalter aufgrund des beschriebenen Energieumladeverhaltens durch die jedem Schalter des Gleichrichters parallel angeordneten Kondensatoren in einer schaltentlasteten Art und Weise.

## Patentansprüche

1. Schaltungsanordnung für einen Gleichrichter bestehend aus einem von einem Dreiphasennetz (U,V,W) gespeisten, von einer Steuereinrichtung (ST) getakteten Gleichrichter, dessen Brückenzweige jeweils separat derart von der Steuereinrichtung (ST) ansteuerbare Halbleiterschalter (S_{B1}-S_{B6}) und dazu parallel geschaltete Leistungsdioden
(D_{B1}-D_{B6}) aufweisen, daß im Wechselspannungseingang des Gleichrichters sinusförmige Ströme fließen und die Zwischenkreisspannung (V₀) auf einem konstanten Wert gehalten wird, wobei der Gleichrichter über einen Kommutierungsvierpol mit einem kapazitiven Zwischenkreis verbunden ist, welcher zur Versorgung eines Verbrauchers dient, wobei
der Kommutierungsvierpol Entkopplungsmittel (D₃) zur Entkopplung der Gleichrichterausgangsspannung (V_{B}) von der Zwischenkreisspannung (V₀), einen von der Steuereinrichtung (ST) getaktet ansteuerbaren induktiven Energiespeicher (L_{R}, S_{R}) und einen mit dem ansteuerbaren induktiven Energiespeicher gekoppelten Entlastungspfad (C_{R}, D₁, D₂, D₄ ) aufweist derart, daß in einer ersten Betriebsphase des Kommutierungsvierpols die Gleichrichterausgangsspannung (V_{B}) durch Aktivierung des induktiven Energiespeichers (L_{R}) zu Null geführt wird, woraufhin das von der Steuereinrichtung (ST) gesteuerte Einschalten der Halbleiterschalter (S_{B1}-S_{B6}) des Gleichrichters spannungslos erfolgt, und daß in einer zweiten Betriebsphase des Kommutierungsvierpols die Energie des induktiven Energiespeichers (L_{R}) über einen quasi-resonanten Umladevorgang entlang des Entlastungspfades (C_{R}, D₁, D₂, D₄) in kapazitive Energiespeichermittel (C_{B1}-C_{B6}) überführt wird, die wiederum ein "weiches" Ausschalten der Leistungshalbleiter (S_{B1}-S_{B6}) ermöglichen,
**dadurch gekennzeichnet, daß** den Entkopplungsmitteln (D₃) eine von der Steuereinrichtung (ST) steuerbare Schaltereinheit (S₂) zugeordnet ist, derart daß eine Energierückspeisung vom Gleichspannungskreis ins Wechselspannungssystem realisierbar ist.

2. Schaltungsanordnung für einen Gleichrichter nach Anspruch 1,
**dadurch gekennzeichnet, daß** die Entkopplungsmittel mindestens eine Entkopplungsdiode (D₃) aufweisen.

3. Schaltungsanordnung für einen Gleichrichter nach Anspruch 1 oder 2,
**dadurch gekennzeichnet, daß** der ansteuerbare induktive Energiespeicher durch die Reihenschaltung aus einem gesteuerten Halbleiterschalter (S_{R}) und einer Induktivität (L_{R}) gebildet wird.

4. Schaltungsanordnung für einen Gleichrichter nach Anspruch 3,
**dadurch gekennzeichnet, daß** die Reihenschaltung in einem Querzweig des Kommutierungsvierpols angeordnet ist.

5. Schaltungsanordnung für einen Gleichrichter nach einem der vorhergehenden Ansprüche,
**dadurch gekennzeichnet, daß** die kapazitiven Energiespeichermittel durch jeweils parallel zu den steuerbaren Halbleiterschaltern (S_{B1}-S_{B6}) des Gleichrichters angeordnete Kondensatoren (C_{B1}-C_{B6}) gebildet sind.

6. Schaltungsanordnung für einen Gleichrichter nach einem der vorhergehenden Ansprüche,
**dadurch gekennzeichnet, daß** der Entlastungspfad durch mindestens zwei in einem weiteren Querzweig des Kommutierungsvierpols liegende Dioden (D₁, D₂) sowie durch einen zwischen dem gemeinsamen Anschlußpunkt der Dioden und dem gemeinsamen Anschlußpunkt von Halbleiterschalter (S_{R}) und Induktivität (L_{R}) angeordneten Kondensator (C_{R}) gebildet ist.

7. Schaltungsanordnung für einen Gleichrichter nach Anspruch 6,
**dadurch gekennzeichnet, daß** der Kondensator (C_{R}) über eine Kopplungsdiode (D₄) mit dem Zwischenkreis verbunden ist.

8. Schaltungsanordnung für einen Gleichrichter nach einem der vorhergehenden Ansprüche,
**dadurch gekennzeichnet, daß** in Reihe zu einer der mindestens zwei Dioden (D₂,D₁) eine weitere Induktivität (L₂) angeordnet ist.

9. Verfahren zum Betreiben einer Gleichrichteranordnung bestehend aus einem von einem Dreiphasennetz (U,V,W) gespeisten, von einer Steuereinrichtung (ST) getakteten Gleichrichter, dessen ansteuerbare Halbleiterschalter (S_{B1}-S_{B6}) und dazu parallel geschaltete Leistungsdioden (D_{B1}-D_{B6}) aufweisende Brückenzweige jeweils separat derart getaktet werden, daß im Wechselspannungseingang des Gleichrichters sinusförmige Ströme fließen und die Zwischenkreisspannung (V₀) auf einem konstanten Wert gehalten wird, wobei der Gleichrichter über einen Kommutierungsvierpol mit einem kapazitiven Zwischenkreis verbunden ist, welcher zur Versorgung eines Verbrauchers dient, wobei
in einer ersten Betriebsphase des vom Zwischenkreis über eine Diode (D₃) entkoppelten Kommutierungsvierpols die Gleichrichterausgangsspannung (V_{B}) durch Aktivierung eines getakteten ansteuerbaren induktiven Energiespeichers (L_{R}) zu Null geführt wird, woraufhin das von der Steuereinrichtung (ST) gesteuerte Einschalten der Halbleiterschalter (S_{B1}-S_{B6}) des Gleichrichters spannungslos erfolgt, und daß in einer zweiten Betriebsphase des Kommutierungsvierpols die Energie des induktiven Energiespeichers (L_{R}) über einen quasi-resonanten Umladevorgang entlang eines Entlastungspfades (C_{R}, D₁, D₂, D₄) in kapazitive Energiespeichermittel (C_{B1}-C_{B6}) überführt wird, die wiederum ein "weiches" Ausschalten der Leistungsschalter (S_{B1}-S_{B6}) ermöglichen,
**dadurch gekennzeichnet, daß** durch die Zuordnung, insbesondere Parallelschaltung, einer von der Steuereinrichtung (ST) steuerbaren Schaltereinheit (S₂) zu den Entkopplungsmitteln eine Energierückspeisung vom Gleichspannungskreis ins Wechselspannungssystem realisierbar ist.

10. Verwendung einer Vorrichtung nach einem der Ansprüche 1 bis 9 zur Speisung einer Schweißstromquelle für den Strom eines Schweißprozesses.

## Claims

1. Circuit arrangement for a rectifier, consisting of a rectifier supplied by a three-phase network (U, V, W), clocked by a control device (ST), the bridge arms thereof respectively comprising semiconductor switches (S_{B1}-S_{B6}) which may be controlled separately by the control device (ST) and power diodes (D_{B1}-D_{B6}) arranged in parallel, such that sinusoidal currents flow in the AC voltage input of the rectifier and the intermediate circuit voltage (V₀) is kept at a constant value, the rectifier being connected via a four-pole commutator to a capacitive intermediate circuit, which is used for supplying a load,
the four-pole commutator comprising decoupling means (D₃) for decoupling the rectifier output voltage (V_{B}) from the intermediate circuit voltage (V₀), an inductive power storage device (L_{R}, S_{R}) which may be controlled in a clocked manner by the control device (ST), and a load relief path (C_{R}, D₁, D₂, D₄) coupled to the controllable inductive power storage device, such that in a first operating phase of the four-pole commutator, the rectifier output voltage (V_{B}) passes to zero by activating the inductive power storage device (L_{R}), whereupon the switching-on of the semiconductor switch (S_{B1}-S_{B6}) of the rectifier controlled by the control device (ST) takes place at zero voltage, and in that in a second operating phase of the four-pole commutator, the energy of the inductive power storage device (L_{R}) is transmitted via a partially-resonant recharging process along the load relief path (C_{R}, D₁, D₂, D₄) into capacitive power storage means (C_{B1}-C_{B6}), which in turn permit a "soft" switching-off of the power semiconductor (S_{B1}-S_{B6}),
**characterised in that** a switching unit (S₂) which is controllable by the control device (ST) is associated with the decoupling means (D₃), such that energy may be returned from the DC voltage circuit to the AC voltage system.

2. Circuit arrangement for a rectifier according to Claim 1,
**characterised in that** the decoupling means comprise at least one decoupling diode (D₃).

3. Circuit arrangement for a rectifier according to Claim 1 or 2,
**characterised in that** the controllable inductive power storage device is formed by the series connection of a controlled semiconductor switch (S_{R}) and an inductance (L_{R}).

4. Circuit arrangement for a rectifier according to Claim 3,
**characterised in that** the series connection is arranged in a shunt arm of the four-pole commutator.

5. Circuit arrangement for a rectifier according to one of the preceding claims,
**characterised in that** the capacitive power storage means are formed by respective capacitors (C_{B1}-C_{B6}) arranged parallel to the controllable semiconductor switches (S_{B1}-S_{B6}) of the rectifier.

6. Circuit arrangement for a rectifier according to one of the preceding claims,
**characterised in that** the load relief path is formed by at least two diodes (D₁, D₂) located in a further shunt arm of the four-pole commutator as well as by a capacitor (C_{R}) arranged between the common connection point of the diodes and the common connection point of the semiconductor switch (S_{R}) and the inductance (L_{R}).

7. Circuit arrangement for a rectifier according to Claim 6,
**characterised in that** the capacitor (C_{R}) is connected via a coupling diode (D₄) to the intermediate circuit.

8. Circuit arrangement for a rectifier according to one of the preceding claims,
**characterised in that** a further inductance (L₂) is arranged in series with one of the at least two diodes (D₂. D₁).

9. Method for operating a rectifier arrangement consisting of a rectifier supplied by a three-phase network (U, V, W) and clocked by a control device (ST), the controllable semiconductor switch (S_{B1}-S_{B6}) thereof and bridge arms comprising power diodes (D_{B1}-D_{B6}) connected in parallel thereto being respectively separately clocked such that sinusoidal currents flow in the AC voltage input of the rectifier and the intermediate circuit voltage (V₀) is kept at a constant value, the rectifier being connected via a four-pole commutator to a capacitive intermediate circuit, which is used for supplying a load,
in a first operating phase of the four-pole commutator decoupled from the intermediate circuit via a diode (D₃), the rectifier output voltage (V_{B}) being passed to zero by activating a clocked controllable inductive power storage device (L_{R}), whereupon the switching-on of the semiconductor switch (S_{B1}-S_{B6}) of the rectifier controlled by the control device (ST) takes place at zero voltage, and in that in a second operating phase of the four-pole commutator, the energy of the inductive power storage device (L_{R}) is transmitted via a partially-resonant recharging process along a load relief path (C_{R}, D1, D2, D4) into capacitive power storage means (C_{B1}-C_{B6}), which in turn permit a "soft" switching-off of the power breaker (S_{B1}-S_{B6}) ,
**characterised in that** by the association, in particular parallel connection, of a switching unit (S₂), which may be controlled by the control device (ST), to the decoupling means energy may be returned from the DC voltage circuit into the AC voltage system.

10. Use of a device according to one of Claims 1 to 9, for supplying a welding power source for the power of a welding process.

## Revendications

1. Agencement de circuit pour un redresseur constitué d'un redresseur alimenté par un réseau triphasé (U, V, W), synchronisé par un dispositif de commande (ST), dont les branches de pont présentent à chaque fois des interrupteurs à semi-conducteurs (S_{B1}-S_{B6}) pouvant être actionnés par le dispositif de commande (ST) et des diodes de puissance (D_{B1}-D_{B6}) branchées en parallèle, de telle sorte que des courants sinusoïdaux circulent dans l'entrée de tension alternative du redresseur et la tension du circuit intermédiaire (V₀) est maintenue sur une valeur constante, le redresseur étant relié par un quadripôle de commutation à un circuit intermédiaire capacitif, lequel sert à l'alimentation d'un consommateur,
le quadripôle de commutation présentant des moyens de découplage (D₃) pour le découplage de la tension de sortie de dresseur (V_{B}) de la tension du circuit intermédiaire (Vₒ), un accumulateur d'énergie (L_{R}, S_{R}) inductif pouvant être actionné de façon synchronisée par le dispositif de commande (ST) et un chemin de décharge (C_{R}, D₁, D₂, D₄) couplé avec l'accumulateur d'énergie inductif actionnable, de telle sorte que, dans une première phase d'exploitation du quadripôle de commutation, la tension de sortie de redresseur (V_{B}) est guidée par l'activation de l'accumulateur d'énergie (L_{R}) inductif vers zéro, après quoi la mise en circuit, commandée par le dispositif de commande (ST), des interrupteurs à semi-conducteurs (S_{B1}-S_{B6}) du redresseur s'effectue sans tension, et en ce que, dans une seconde phase d'exploitation du quadripôle de commutation, l'énergie de l'accumulateur d'énergie (L_{R}) inductif est transférée par une opération de transfert quasi résonante le long du chemin de décharge (C_{R}, D₁, D₂, D₄) dans des moyens d'accumulateur d'énergie (C_{B1}-C_{B6}) capacitifs, qui permettent à leur tour une déconnexion "souple" des semi-conducteurs de puissance (S_{B1}-S_{B6}),
**caractérisé en ce qu'**une unité de commutateur (S₂) contrôlable par le dispositif de commande (ST) est attribuée aux moyens de découplage (D₃), de telle sorte qu'une réjection d'énergie du circuit de tension continue dans le système de tension alternative est réalisable.

2. Agencement de circuit pour un redresseur selon la revendication 1,
**caractérisé en ce que** les moyens de découplage présentent au moins une diode de découplage (D₃).

3. Agencement de circuit pour un redresseur selon la revendication 1 ou 2,
**caractérisé en ce que** l'accumulateur d'énergie inductif activable est formé par le montage en série constitué d'un interrupteur à semi-conducteurs (S_{R}) commandé et d'une inductance (L_{R}).

4. Agencement de circuit pour un redresseur selon la revendication 3,
**caractérisé en ce que** le montage en série est disposé dans une branche transversale du quadripôle de commutation.

5. Agencement de circuit pour un redresseur selon l'une quelconque des revendications précédentes,
**caractérisé en ce que** les moyens d'accumulateur d'énergie capacitifs sont formés par des condensateurs (C_{B1}-C_{B6}) disposés respectivement parallèlement aux interrupteurs à semi-conducteurs (S_{B1}-S_{B6}) contrôlables du redresseur.

6. Agencement de circuit pour un redresseur selon l'une quelconque des revendications précédentes,
**caractérisé en ce que** le chemin de décharge est formé par au moins deux diodes (D₁, D₂) disposées dans une autre branche transversale du quadripôle de commutation ainsi que par un condensateur (C_{R}) disposé entre le point de raccordement commun des diodes et le point de raccordement commun de l'interrupteur à semi-conducteurs (S_{R}) et de l'inductance (L_{R}).

7. Agencement de circuit pour un redresseur selon la revendication 6,
**caractérisé en ce que** le condensateur (C_{R}) est relié par une diode de couplage (D₄) au circuit intermédiaire.

8. Agencement de circuit pour un redresseur selon l'une quelconque des revendications précédentes,
**caractérisé en ce qu'**une autre inductance (L₂) est disposée en série avec l'une des au moins deux diodes (D₂, D₁).

9. Procédé pour l'exploitation d'un agencement de redresseur comprenant un redresseur alimenté par un réseau triphasé (U, V, W), synchronisé par un dispositif de commande (ST), dont des interrupteurs à semi-conducteurs (S_{B1}-S_{B6}) actionnables et des branches de pont présentant des diodes de puissance (D_{B1}-D_{B6}) commutées parallèlement à ces interrupteurs sont synchronisés à chaque fois séparément de telle sorte que des courants sinusoïdaux circulent dans l'entrée de tension alternative du redresseur et la tension de circuit intermédiaire (V₀) est maintenue sur une valeur constante, le redresseur étant relié par un quadripôle de commutation à un circuit intermédiaire capacitif, lequel sert à l'alimentation d'un consommateur,
la tension de sortie de redresseur (V_{B}) étant guidée vers zéro dans une première phase d'exploitation du quadripôle de commutation dissocié du circuit intermédiaire par une diode (D₃) par l'activation d'un accumulateur d'énergie (L_{R}) inductif, actionnable et synchronisé, après quoi la mise en circuit, commandée par le dispositif de commande (ST), des interrupteurs à semi-conducteurs (S_{B1}-S_{B6}) du redresseur s'effectue sans tension et en ce que, dans une seconde phase d'exploitation du quadripôle de commutation, l'énergie de l'accumulateur d'énergie (L_{R}) inductif est transférée par une opération de transfert quasi résonante le long d'un chemin de décharge (C_{R}, D₁, D₂, D₄) dans des moyens d'accumulateur d'énergie (C_{B1}-C_{B6}) capacitifs, lesquels permettent à leur tour une mise hors circuit "souple" des interrupteurs de puissance (S_{B1}-S_{B6}),
**caractérisé en ce qu'**une réinjection d'énergie du circuit de tension continue dans le système de tension alternative peut être réalisée par l'attribution, en particulier par montage en parallèle, d'une unité de commutateur (S₂) contrôlable par le dispositif de commande (ST) aux moyens de découplage.

10. Utilisation d'un dispositif selon l'une quelconque des revendications 1 à 9 pour l'alimentation d'une source de courant de soudage pour le courant d'un processus de soudage.
